(19) Europäisches Patentamt
European Patent Office
Office européen des brevets

(11) EP 0 633 820 B1

(12) EUROPÄISCHE PATENTSCHRIFT

(45) Veröffentlichungstag und Bekanntmachung des Hinweises auf die Patenterteilung:
17.01.1996 Patentblatt 1996/03

(51) Int. Cl.$^6$: **B23F 1/02**, B23F 23/12, B24B 53/085

(21) Anmeldenummer: 93905198.3

(86) Internationale Anmeldenummer: PCT/DE93/00244

(22) Anmeldetag: 12.03.1993

(87) Internationale Veröffentlichungsnummer: WO 93/19881 (14.10.1993 Gazette 1993/25)

(54) **VERFAHREN UND EINRICHTUNG ZUM SCHLEIFEN RILLENFÖRMIGER AUSSENPROFILE EINES WERKSTÜCKES**

METHOD AND DEVICE FOR GRINDING GROOVED EXTERNAL SURFACES OF A WORKPIECE

PROCEDE ET DISPOSITIF POUR MEULER LES PROFILS EXTERIEURS D'UNE PIECE A RAINURES

(84) Benannte Vertragsstaaten:
CH IT LI

(30) Priorität: 27.03.1992 DE 4210710

(43) Veröffentlichungstag der Anmeldung:
18.01.1995 Patentblatt 1995/03

(73) Patentinhaber: NILES WERKZEUGMASCHINEN GMBH BERLIN
D-13088 Berlin (DE)

(72) Erfinder:
• LENZ, Sieghart
D-1156 Berlin (DE)
• ULRICH, Hans-Joachim
D-1156 Berlin (DE)
• RÜHLE, Jürgen
D-1055 Berlin (DE)

(56) Entgegenhaltungen:
EP-A- 0 021 329       EP-A- 0 328 482
DD-A-  262 177        DD-A-  291 500
DE-A- 3 524 690       DE-A- 3 736 463
FR-A- 2 531 653       US-A- 3 776 213

• WERKSTATT UND BETRIEB Bd. 118, Nr. 5, Mai 1985, MÜNCHEN (DE) Seiten 289 - 293 H.H. HOFMANN 'ZAHNFLANKENSCHLEIFEN MIT HILFE VON ROLLBANDW[LZGETRIEBEN'

**Beschreibung**

Die Erfindung betrifft ein Verfahren gemäß Oberbegriff von Patentanspruch 1 und eine Einrichtung gemäß Oberbegriff von Patentanspruch 3 zum Schleifen rillenförmiger Außenprofile eines Werkstückes, insbesondere zum Schleifen von Verzahnungen an Gerad- und Schrägstirnrädern, bei denen mittels zweier Schleifkörper, die entsprechend den Außenprofilkonturen des Werkstückes profiliert werden, Teilprofile ein und desselben Werkstückes gleichzeitig bearbeitet werden, indem durch Verschiebung der Schleifkörper gegeneinander Zustellungen bewirkt werden und durch ihre gemeinsame Hubbewegung die Spanabnahme am Werkstück erfolgt.

Es ist bekannt, daß beim Profilschleifen die Genauigkeit des am Werkstück erzeugten Profils im wesentlichen von der Formtreue des Schleifkörperprofils abhängt. Diese Tatsache ist dadurch bedingt, daß beim Profilschleifen das Profil des Schleifkörpers direkt auf das Werkstück übertragen wird. Jede Abweichung vom Sollprofil des Schleifkörpers wirkt sich unmittelbar als Fehler am Werkstück aus.

Der Schleifkörper muß demzufolge zur Erzielung einer hohen Bearbeitungsgenauigkeit exakt das Gegenprofil zum zu erzeugenden Profil aufweisen.

Andererseits wird durch die Art und Weise der Profilierung des Schleifkörpers die Topographie desselben bestimmt. Die Topographie wiederum hat maßgeblichen Einfluß auf die Bearbeitungsgenauigkeit und Effektivität beim Schleifen.

Aus den genannten Gründen kommt dem Prozeß der Profilierung des Schleifkörpers beim Profilschleifen eine besondere Bedeutung zu.

Bekannt sind verschiedene Verfahren und Einrichtungen zum Profilschleifen von Werkstücken, die auch Lösungen zum Abrichten des Schleifkörpers beinhalten. Nach Keck "Die Zahnradpraxis" (Verlag R.Oldenbourg München 1956, S. 195 ff.) ist es bekannt, zum Profilschleifen von Zahnrädern zwei Schleifköper zur gleichzeitigen Bearbeitung auseinanderliegender Zahnflanken ein und desselben Zahnrades einzusetzen. Beide Schleifkörper sind dabei gleichachsig, mit einem entsprechenden axialen Abstand auf einer gemeinsamen Schleifspindelwelle fest angeordnet. Vor Beginn des Schleifprozesses werden die Schleifkörper mit Hilfe einer Abrichteinrichtung profiliert. Nachteilig bei dieser Lösung ist, daß die hierbei verwendeten Schleifkörper nur eine geringe Steife aufweisen, da sie scheibenförmig ausgebildet sind. Die geringe Steife der Schleifkörper und ihre unterschiedliche Neigung infolge der Wellenbiegung führt zu einer Verringerung der Bearbeitungsgenauigkeit. Dieser Nachteil macht sich insbesondere dann bemerkbar, wenn Zahnräder mit kleinen Moduln bearbeitet werden. Im Zusammenhang mit dieser Lösung sind die Möglichkeiten des Abrichtens von Profilschleifkörpern beschrieben. Dabei geht man davon aus, daß die Profilschleifkörper mit Diamanten, deren Spitzen zwangsläufig geführt sind, abgerichtet werden. Die Bahn der Abrichtdiamanten wird somit von Schablonen gesteuert, was wiederum erfordert, daß für jedes zu erzeugende Profil eine gesonderte Schablone vorhanden sein muß. Ein weiterer Nachteil dieser Lösung besteht in der geringen Flexibilität, da sich die Maschine nur mit einem hohen Aufwand auf veränderte Bearbeitungsaufgaben umrüsten läßt. Dieses ist durch die notwendige Veränderung der Schleifkörperaufnahme, den Austausch der Schleifkörper und die Umrüstung der Abrichteinrichtung bedingt.

In dem DD-AP 291 500 ist eine Lösung beschrieben, bei der die Bearbeitung von profilierten Werkstücken, insbesondere von Zahnrädern, durch zwei getrennt angeordnete Schleifkörper erfolgt. Jeder Schleifkörper befindet sich auf einem Schleifsupport, wobei beide Schleifsupporte um einen festen Winkel $\alpha$ zur Verschiebeachse der Schleifsupporte geneigt sind. Zum Profilieren der Schleifkörper ist jedem der Schleifkörper ein separates Abrichtwerkzeug zugeordnet. Die Schleifkörperprofilierung erfolgt in Bahnsteuerung der Maschinenachsen $Y_A/U_1$ und $Y_A/U_2$. Nachteilig bei dieser Lösung ist die Tatsache, daß jede Zustellbewegung des Abrichtschlittens $\Delta Y_A$ eine Kompensation beider Schleifkörperachsen um $\Delta U_1$ und $\Delta U_2$ erforderlich macht. Dabei wirken sich sowohl die Positionierfehler der Abrichtwerkzeuge als auch die der Kompensationsbewegung direkt auf das Bearbeitungsergebnis aus.

Ein weiterer Nachteil dieser Lösung besteht darin, daß zur Bahnsteuerung der Maschinenachsen $Y_A/U_1$ und $Y_A/U_2$ ständig über die Software eine Translation des Werkstückprofiles in das Abrichtprofil vorgenommen werden muß, was einen erhöhten Rechenaufwand erfordert.

In der DE-AS 23 43 494, die den nächstkommenden Stand der Technik beschreibt, ist eine Abrichtvorrichtung für einen Schleifkörper an einer Zahnradformschleifmaschine beschrieben. Gemäß einem Ausführungsbeispiel ist es vorgesehen, zwei Schleifkörper mit einem Abrichtwerkzeug gleichzeitig abzurichten.

Das Abrichtwerkzeug weist hierbei das Profil von zwei Zahnflanken des zu bearbeitenden Stirnrades auf. Nachteilig bei dieser Lösung zum Profilabrichten ist insbesondere die Tatsache, daß dieses Abrichtwerkzeug nur für gleiche Werkstücke verwendbar ist. Wird die Maschine auf die Bearbeitung anderer Werkstücke umgerüstet, so ist der Einsatz eines anderen Abrichtwerkzeuges notwendig. Dieser Nachteil macht sich insbesondere bei geringen Serienstückzahlen bemerkbar. Bei dieser Lösung ist weiterhin nachteilig, daß mit dem Abrichtwerkzeug keine optimale Schleifkörpertopographie erzeugbar ist.

In der Patentschrift DE-PS 877 093 ist eine Maschine zum Schleifen von Zahnradflanken mittels Formscheiben beschrieben. Diese Lösung sieht vor, daß zwei als Formscheiben ausgebildete Schleifkörper jeweils die linke und rechte Flanke eines Zahnrades bearbeiten. Beide Schleifkörper sind einstellbar auf einem separaten Träger angeordnet, wobei jeder Träger relativ zum Werkstück zum Zweck der Spanzustellung um die Werkstückachse schwenkbar ist. Weiterhin ist bei dieser Lösung vorgesehen, daß jedem Schleifkörper eine eigene Abrichteinrichtung zugeordnet ist. Demzufolge können beide Schleifkörper nur unabhängig voneinander abgerichtet werden, so daß die zur Endbearbeitung des Zahnrades erforderliche Genauigkeit der korrespondierenden Schleifkörperprofile nur eingeschränkt durch den Abrichtprozeß realisierbar ist. Nach der DE-OS 37 36 463 ist weiterhin eine Schleifmaschine und ein mit dieser durchgeführtes Verfahren bekannt.

Diese Maschine weist einen relativ zur rotierenden Schleifscheibe hin- und herverschiebbaren Arbeitstisch auf, der in der Flucht zum Werkstück eine Abrichteinrichtung trägt. Der Schleif- und Abrichtprozeß werden automatisch gesteuert. Mit dieser Schleifmaschine ist es auch möglich, ein vorgegebenes Profil am Schleifkörper zu erzeugen, womit dann entsprechend profilierte Werkstücke bearbeitet werden können. Eine zusätzlich angeordnete Meßeinrichtung dient dazu, Abweichungen des Werkstückes von den Soll-Maßen zu erfassen, die anschließend beim Schleifen korrigierend berücksichtigt werden.

Der Nachteil dieser Lösung besteht darin, daß sie die Bearbeitung von Werkstücken nur mit begrenzter Produktivität ermöglicht, da nur ein einzelner Schleifkörper verwendet wird.

Der Erfindung liegt die Aufgabe zugrunde, ein Verfahren und eine Einrichtung zum Schleifen rillenförmiger Außenprofile eines Werkstückes, insbesondere zum Schleifen von Verzahnungen an Gerad- und Schrägstirnrädern, bei denen mittels zweier Schleifkörper, die entsprechend den Außenprofilkonturen des Werkstückes profiliert werden, Teilprofile ein und desselben Werkstückes gleichzeitig bearbeitet werden, indem durch Verschiebung der Schleifkörper gegeneinander Zustellungen bewirkt werden und durch ihre gemeinsame Hubbewegung die Spanabnahme am Werkstück erfolgt, zu schaffen, mit denen eine Vielzahl unterschiedlicher Profile am Werkstück mit hoher Genauigkeit und Produktivität erzeugt werden kann und eine schnelle und problemlose Anpassung an veränderte Bearbeitungsaufgaben möglich ist.

Die Aufgabe in bezug auf das Verfahren wird durch die Verfahrensschritte gemäß dem Kennzeichen des Patentanspruches 1 gelöst.

Das Kennzeichen des Patentanspruches 2 enthält die vorteilhaften Verfahrensschritte zum Abrichten der Schleifkörper für das Profilschleifen von Zahnrädern nach dem erfindungsgemäßen Verfahren entsprechend Patentanspruch 1.

Die Einrichtung zur Durchführung des erfindungsgemäßen Verfahrens mit den kennzeichnenden Merkmalen nach Patentanspruch 3 sieht entsprechend der Erfindung vor, daß jeder Schleifsupport CNC-gesteuert axial verschiebbar ist und ein einziges rotierendes Abrichtwerkzeug beiden Schleifkörpern zugeordnet ist. Die Rotationsachse des Abrichtwerkzeuges ist parallel zur Drehachse der Schleifkörper angeordnet. Das Abrichtwerkzeug befindet sich auf einer Abrichteinrichtung, die in zwei Koordinaten bewegbar und mit einer CNC-Steuereinrichtung verbunden ist.

Die Ausgestaltung der erfindungsgemäßen Einrichtung sieht eine vorteilhafte Ausführungsform des rotierenden Abrichtwerkzeuges mit den Merkmalen des Patentanspruches 4 vor.

Eine weitere vorteilhafte Ausführungsform des rotierenden Abrichtwerkzeuges wird durch die Merkmale des Patentanspruches 5 gekennzeichnet.

Der wesentliche Vorteil der erfindungsgemäßen Lösung besteht darin, daß mit einem einzigen Abrichtwerkzeug mit definiertem Profil alle Teilprofile der Schleifkörper in einem geschlossenen Arbeitszyklus profilierbar sind. Damit wird mit einem geringen Aufwand bei der Umstellung auf andere Profile eine hohe Reproduzierbarkeit erreicht.

Durch die Identität der Abricht- und Schlichtschleifpositionen der Schleifkörper wird gewährleistet, daß die an den Schleifkörpern erzeugten Profile unverfälscht auf das Werkstück übertragen werden können. Die erfindungsgemäße Lösung ist einsetzbar für das Profilschleifen zahnradförmiger Teile sowie für das Teilwälzschleifen von Verzahnungen, sowohl bei Benutzung eines als auch zweier ein- oder mehrprofiliger Schleifkörper.

Die Erfindung soll nachstehend an Ausführungsbeispielen näher erläutert werden.

Es zeigen:

Fig. 1       Zuordnung der beiden Schleifkörper zum Werkstück einerseits und zum Abrichtwerkzeug andererseits

Fig. 2       Positionen der Schleifkörper beim Abrichten/Schlichtschleifen und beim Schruppschleifen

Fig. 3.1    Radiale Abrichtzustellung

Fig. 3.2    kombiniert radiale-tangentiale Abrichtzustellung

Fig. 4       Profilierungszyklus

Fig. 5.1    Abrichtkompensation bei radialer Abrichtzustellung

Fig. 5.2    Abrichtkompensation bei kombiniert radialer-tangentialer Abrichtzustellung

Fig. 6       Werkzeugträgerbaugruppe einer Zahnrad-Profilschleifmaschine

Fig. 7       rotierendes Abrichtwerkzeug

Fig. 8       rotierendes Abrichtwerkzeug

Fig. 9       Anwendung der erfindungsgemäßen Lösung für das Zahnrad-Profilschleifen von beiden Zahnflanken zweier Zahnlücken mit zwei Schleifkörpern gleicher oder unterschiedlicher Topographie

Fig. 10     Anwendung der erfindungsgemäßen Lösung für das Zahnrad-Teilwälzschleifen von je einer Zahnflanke zweier Zahnlücken mit Doppelkegelschleifkörpern

Fig. 11     Anwendung der erfindungsgemäßen Lösung für das Zahnrad-Teilwälzschleifen von beiden Zahnflanken zweier Zahnlücken mit zwei Doppelkegelschleifkörpern

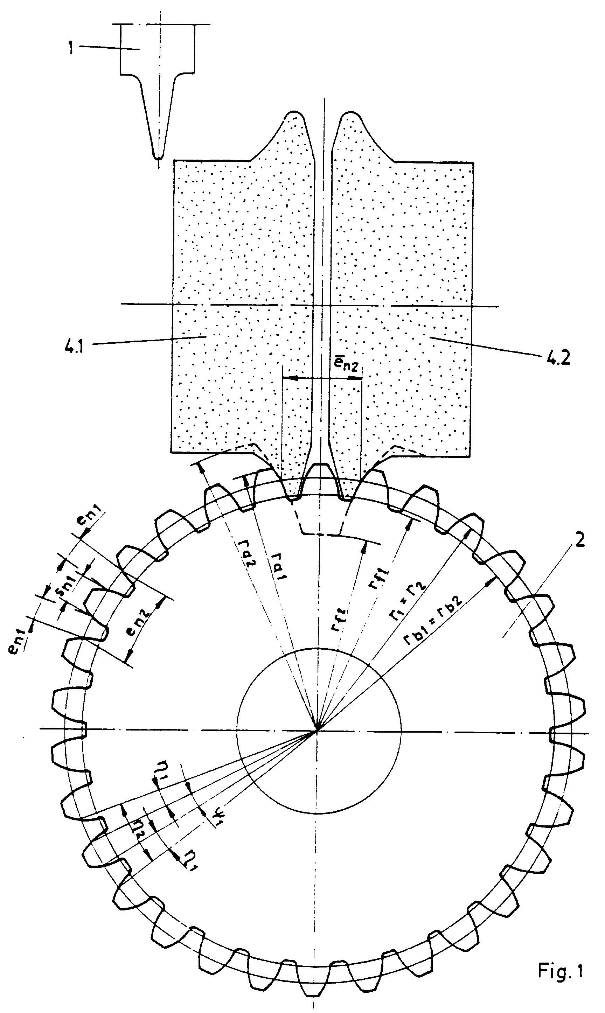

In der Figur 1 sind im oberen Teil, der um 90 Grad in die Bildebene hineingeklappt ist, die Zuordnung der beiden Schleifkörper 4.1. und 4.2. zum Abrichtwerkzeug 1 und im unteren Teil die Zuordnung der Schleifkörper 4.1. und 4.2. zum Werkstück 2 dargestellt. Die Darstellung bezieht sich darauf, daß mit den beiden Schleifkörpern 4.1. und 4.2. die beiden außenliegenden Zahnflanken benachbarter Zahnlücken geschliffen werden sollen.

Dabei ist der Abstand $e_{n2}$ zwischen den außenliegenden Schleifflächen der Schleifkörper 4.1. und 4.2. identisch mit der Zahnlückensehne der Ersatzverzahnung (Index 2) bezogen auf den Teilungszylinder der Werkstückes 2.

Zwischen der Ersatzverzahnung (Index 2) und der Verzahnung des Werkstückes 2 (Index 1) ergibt sich folgender Zusammenhang:
Verzahnung des

Werkstückes 2: Normalmodul $m_{n1}$
Zähnezahl $z_1$
Eingriffswinkel $\alpha_1$
Schrägungswinkel $\beta_1$
Profilverschiebung $m_{n1} \cdot x_1$

Ersatzverzahnung: Normalmodul $m_{n2}$
Zähnezahl $z_2$
Eingriffswinkel $\alpha_2$
Schrägungswinkel $\beta_2$
Profilverschiebung $m_{n2} \cdot x_2$

Bedingungen:

A $\alpha_1 = \alpha_2 = \alpha$
$\beta_1 = \beta_2 = \beta$
$d_1 = d_2$ (Teilkreisdurchmesser)
$d_{b1} = d_{b2}$ (Grundkreisdurchmesser)
B $m_{n1} \cdot x_1 = m_{n2} \cdot x_2$

Nach Bedingung A ergibt sich

$$d_1 = z_1 \cdot m_{n1}/\cos \beta$$

$$d_2 = z_2 \cdot m_{n2}/\cos \beta$$

$$d_{b1} = d_1 \cdot \cos \alpha = z_1 \cdot m_{n1} \cdot \cos \alpha/\cos \beta$$

$$d_{b2} = z_2 \cdot m_{n2} \cdot \cos \alpha/\cos \beta$$

$$d_{b1} = d_{b2}$$

$$z_1 \cdot m_{n1} = z_2 \cdot m_{n2}$$

$$m_{n2} = \frac{z_1}{z_2} \cdot m_{n1}$$

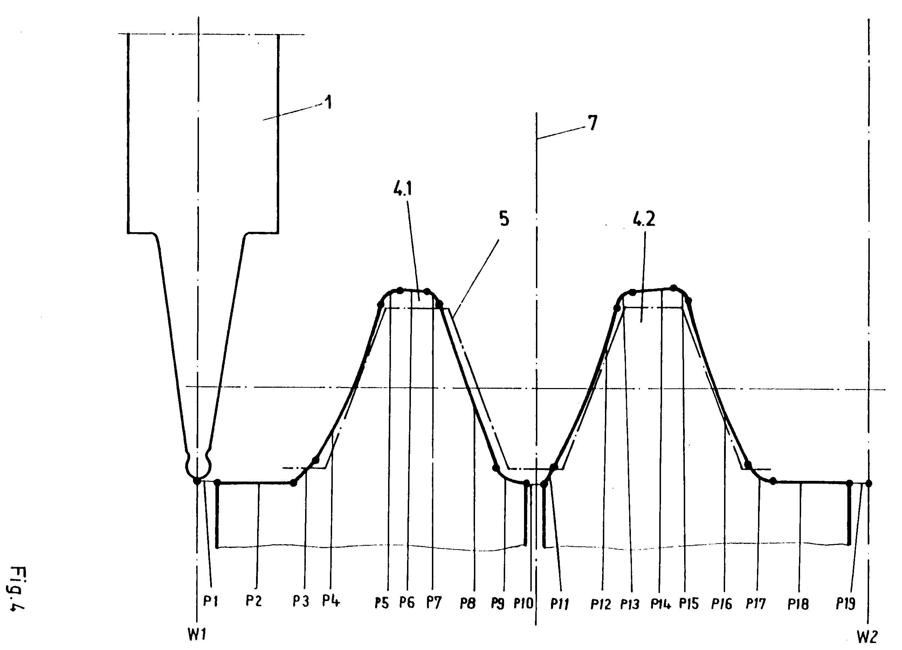

Mit dem Ansatz (vergl. Figur 4)

$$e_{t2} = 2e_{t1} + s_{t1}$$

mit

$$e_{t2} = m_{t2} \left[ \frac{\pi}{2} - 2x_2 \cdot \tan \alpha_n \right]$$

$$e_{t1} = m_{t1} \left[ \frac{\pi}{2} - 2x_1 \cdot \tan \alpha_n \right]$$

$$s_{t1} = m_{t1} \left[ \frac{\pi}{2} + 2x_1 \cdot \tan \alpha_n \right]$$

($e_t$ = Zahnlückenweite, $s_t$ = Zahndicke, $m_t$ = Stirnmodul) ergibt sich:

$$m_{t2}\left[\frac{\pi}{2} - 2x_2 \cdot \tan \alpha_n\right] = m_{t1}\left(\left[\pi - 4x_1 \cdot \tan \alpha_n\right] + \left[\frac{\pi}{2} + 2x_1 \cdot \tan \alpha_n\right]\right)$$

$$= m_{t1}\left[\frac{3\pi}{2} - 2x_1 \cdot \tan \alpha_n\right]$$

$$m_{t2} \cdot {}^{\pi}/2\text{-}2m_{t2}x_2 \cdot \tan \alpha_n = 3m_{t1} \cdot {}^{\pi}/2\text{-}2m_{t1} \cdot x_1 \cdot \tan \alpha_n \text{ und}$$

$$\text{mit } \beta_1 = \beta_2 = \beta \text{ und } m_{t1} = m_{n1}/\cos \beta, \ m_{t2} = m_{n2}/\cos \beta$$

$$m_{n2} \cdot {}^{\pi}/2\text{-}2m_{n2} \cdot x_2 \cdot \tan \alpha_n = 3m_{n1} \cdot {}^{\pi}/2\text{-}2 \ m_{n1} \cdot x_1 \cdot \tan \alpha_n$$

Mit Bedingung B folgt

$$m_{n2} \cdot {}^{\pi}/2 = 3m_{n1} \cdot {}^{\pi}/2$$

$$m_{n2} = 3m_{n1}$$

Hiermit kann beim Zahnrad-Profilschleifen der außenliegenden Zahnflanken zweier benachbarter Zahnlücken eines Werktückes 2 mit der Verzahnung (Index 1) mittels zweier Schleifkörper 4.1 und 4.2 die abzurichtende Kontur der beiden Schleifkörper 4.1 und 4.2 auf eine Ersatzverzahnung (Index 2) zurückgeführt werden, für die gilt:

$$m_{n2} = 3.m_{n1}$$

$$z_2 = z_1/3$$

$$d_2 = d_1$$

$$d_{b2} = d_{b1}$$

$$m_{n2} \cdot x_2 = m_{n1} \cdot x_1$$

Der Abstand der beiden außenliegenden Schleifflächen der Schleifkörper 4.1 und 4.2 bezogen auf den Teilzylinder beträgt damit

$$\bar{e}_{n2} = \frac{d.\sin[(\psi_1 + 2\eta_1)\cos^3 \beta]}{\cos^2 \beta}$$

über die bereits erläuterten Kurzzeichen hinaus bedeuten in der Gleichung

$\psi_1$      = Zahndickenhalbwinkel
$\eta_1$      = Zahnlückenhalbwinkel

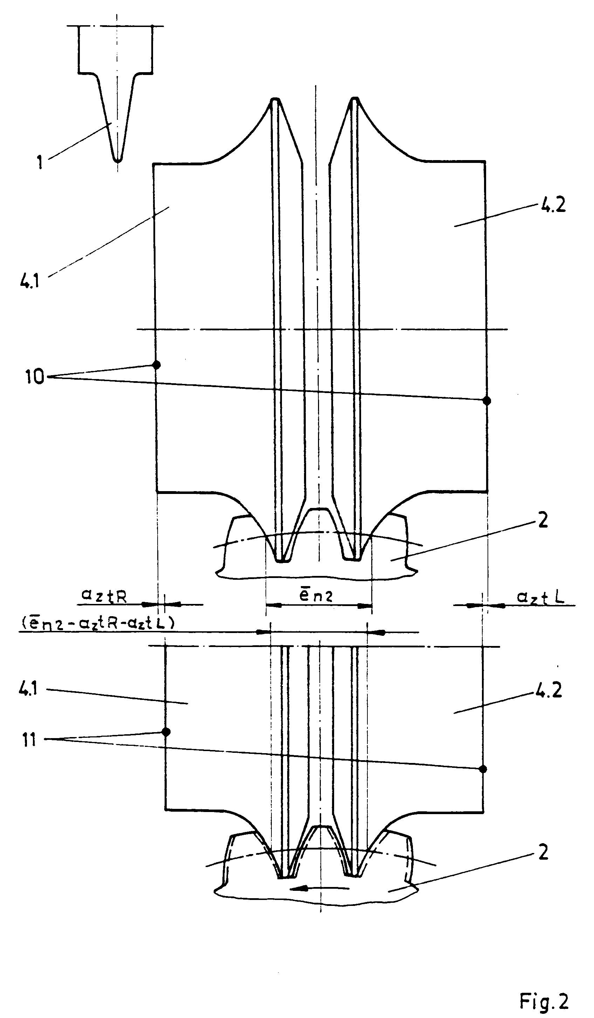

In Figur 2 sind die Positionen der Schleifkörper 4.1 und 4.2 dargestellt, die sie beim Abrichten/Schlichtschleifen (Positionen 10 - obere Darstellung Figur 2) und beim Schruppschleifen (Positionen 11 - untere Darstellung Figur 2) einnehmen.

Im oberen Teil der Figur 2, der um 90 Grad in die Bildebene hineingeklappt ist, ist die Zuordnung der beiden Schleifkörper 4.1 und 4.2 zum Abrichtwerkzeug 1, unterhalb der Mittellinie ist die Zuordnung der Schleifkörper 4.1 und 4.2 zum Werkstück 2 dargestellt.

Zum Abrichten befinden sich die Schleifkörper 4.1 und 4.2 immer in ihren Positionen 10, wobei ihre Schleifflächen bezogen auf den Teilzylinder den Abstand $\bar{e}_{n2}$ aufweisen. Für das Schruppschleifen werden die Schleifkörper 4.1 und 4.2 um den Zustellbetrag $a_{ztR}$ bzw. $a_{ztL}$ in die Positionen 11 tangential verschoben, wobei $a_{ztR}/a_{ztL}$ entweder dem Schlichtzustellbetrag oder der Summe aus Schlichtzustellbetrag und einem Schruppzustellbetrag für einen zweiten Schruppschleifumlauf entspricht.

Bei einem gegebenenfalls erforderlichen Zwischenabrichten nehmen die Schleifkörper 4.1 und 4.2 jeweils wieder die Positionen 10 ein.

Nach dem Abrichten für das Schlichtschleifen werden die Positionen 10 für die Durchführung des Schlichtschleifens nicht mehr verändert.

Dadurch kann das durch das Abrichtwerkzeug 1 erzeugte Profil ohne Verfälschung durch etwaige Positionierfehler der Schleifkörper 4.1 und 4.2 auf das Werkstück 2 übertragen werden.

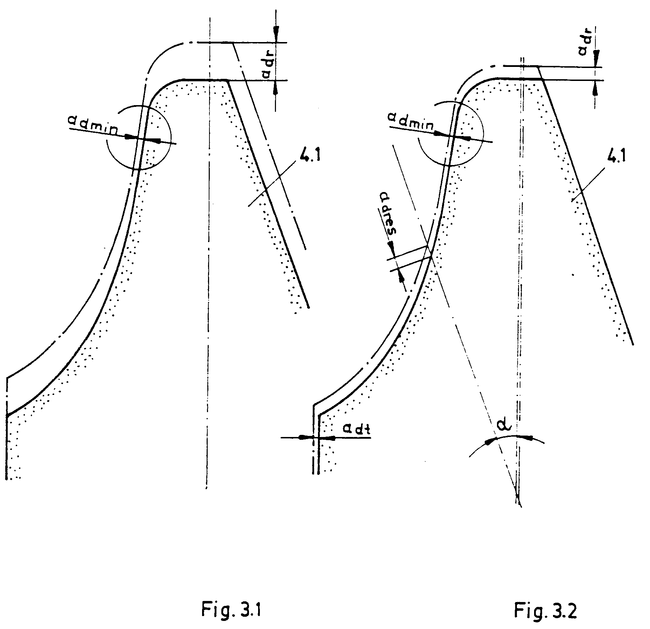

In Figur 3.1 ist die radiale Abrichtzustellung $a_{dr}$ dargestellt, in Figur 3.2 die kombiniert radiale ($a_{dr}$) - tangentiale ($a_{dt}$) Abrichtzustellung $a_{dres}$ in einer Vorzugsrichtung entsprechend dem Winkel $\alpha$ (Eingriffswinkel ) und

$$a_{dres} = \sqrt{a_{dr}^2 + a_{dt}^2},$$

$a_{dt}/a_{dr} = \tan\alpha$. Die tangentiale Komponente der Abrichtzustellung $a_{dt}$ erfolgt durch die Schleifkörper 4.1 und 4.2.

Es ist ersichtlich, daß die Realisierung einer minimalen Abrichtzustellung $a_d$ min zur Erzeugung der erforderlichen Schleifkörpertopographie bei der kombiniert radialen - tangentialen Abrichtzustellung $a_{dres}$ einen wesentlich geringeren Schleifkörperverbrauch beim Abrichten erfordert, als bei radialer Abrichtzustellung. Das ist insbesondere beim Abrichten keramisch gebundener CBN-Schleifkörper von Bedeutung, um den Verbrauch des teuren Schleifmittels CBN gering zu halten.

Figur 4 zeigt die Elemente P1 bis P19 des Profilierungszyklus beim Abrichten zweier Schleifkörper 4.1 und 4.2, wobei das rotierende Abrichtwerkzeug 1 CNC-gesteuert entweder von der Warteposition W1 zur Warteposition W2 bewegt wird oder umgekehrt.

Die einzelnen Elemente des Profilierungszyklus sind:

P1 Heranfahren des Abrichtwerkzeuges 1 aus der Warteposition W1 an den Schleifkörper 4.1
   (Gerade)
P2 Profilieren des im allgemeinen zylindrischen Verstärkungsbereiches des Schleifkörpers 4.1
   (Gerade)
P3 Profilieren der den Kopfbereich des zahnradförmigen Teiles schleifenden Kontur des Schleifkörpers 4.1
   (Kreisbogen oder Gerade)
P4 Profilieren der den Flankenbereich des zahnradförmigen Teiles schleifenden Kontur des Schleifkörpers 4.1
   (Evolvente oder modifizierte Evolvente oder Kreisbogen oder Gerade)
P5 Profilieren der den Fußbereich des zahnradförmigen Teiles schleifenden Kontur des Schleifkörpers 4.1
   (Kreisbogen oder spezielle Kurve)
P6 Profilieren der Außenkontur (Mantellinie eines Kegels oder eines Zylinders) des Schleifkörpers 4.1
   (Gerade)
P7 Profilieren des Übergangs Außenkontur/Gegenflankenbereich des Schleifkörpers 4.1
   (Kreisbogen oder Gerade oder spezielle Kurve)
P8 Profilieren des Gegenflankenbereiches - im allgemeinen Fall eine innerhalb des Bezugsprofils (Bezugszahnstange) 5 liegende Kontur, im besonderen Fall die spezielle Kontur der Gegenflanke - des Schleifkörpers 4.1
   (Gerade oder Kreisbogen oder Evolvente oder modifizierte Evolvente)
P9 Profilieren des Gegenflankenfußbereiches des Schleifkörpers 4.1
   (Kreisbogen oder Gerade oder spezielle Kurve)
P10 Durchfahren des Übergangs von Schleifkörper 4.1 zu Schleifkörper 4.2
   (Kreisbogen oder Gerade)
P11 Profilieren des Gegenflankenfußbereiches des Schleifkörpers 4.2
   (Kreisbogen oder Gerade oder spezielle Kurve)
P12 Profilieren des Gegenflankenbereiches - im allgemeinen Fall eine innerhalb des Bezugsprofils (Bezugszahnstange) 5 liegende Kontur, im besonderen Fall die spezielle Kontur der Gegenflanke - des Schleifkörpers 4.2
   (Gerade oder Kreisbogen oder Evolvente oder modifizierte Evolvente)
P13 Profilieren des Übergangs Außenkontur/Gegenflankenbereich des Schleifkörpers 4.2
   (Kreisbogen oder Gerade oder spezielle Kurve)
P14 Profilieren der Außenkontur (Mantellinie eines Kegels oder eines Zylinders des Schleifkörpers 4.2
   (Gerade)
P15 Profilieren der den Fußbereich des zahnradförmigen Teiles schleifenden Kontur des Schleifkörpers 4.2
   (Kreisbogen oder spezielle Kurve)
P16 Profilieren der den Flankenbereich des zahnradförmigen Teiles schleifenden Kontur des Schleifkörpers 4.2
   (Evolvente oder modifizierte Evolvente oder Kreisbogen oder Gerade)
P17 Profilieren der den Kopfbereich des zahnradförmigen Teiles schleifenden Kontur des Schleifkörpers 4.2
   (Kreisbogen oder Gerade)
P18 Profilieren des im allgemeinen zylindrischen Verstärkungsteiles des Schleifkörpers 4.2
   (Gerade)
P19 Herausfahren des Abrichtwerkzeuges 1 in die Warteposition W2
   (Gerade)

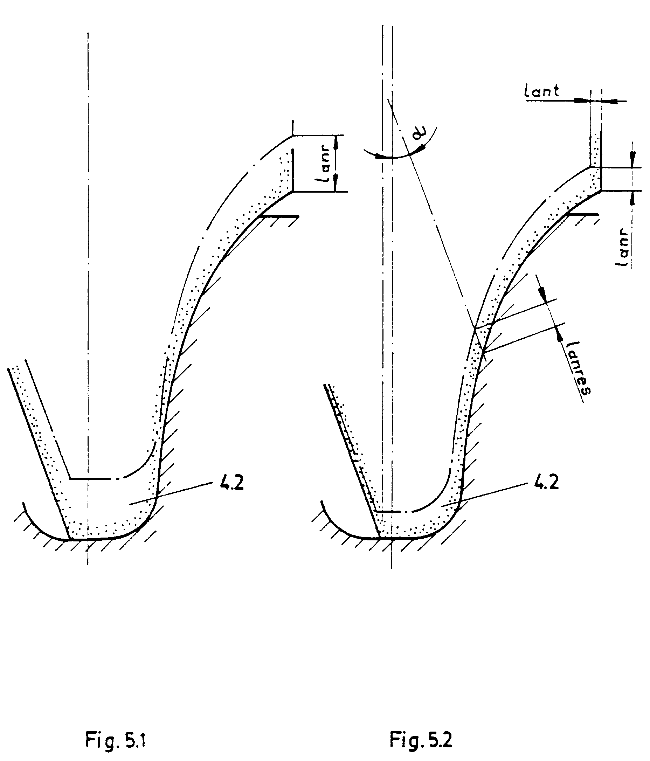

Je nach Bearbeitungsaufgabe sind einzelne Elemente des Profilierungszyklus auszuführen (Gerade, Kreisbogen usw.) oder können gegebenenfalls entfallen. In Figur 5.1 ist die Abrichtkompensation $l_{anr}$ des Schleifkörpers 4.2 bei radialer Abrichtzustellung $a_{dr}$ dargestellt, in Figur 5.2 die Abrichtkompensation

$$l_{an\,res} = \sqrt{l_{anr}^{2} + l_{ant}^{2}}$$

bei kombiniert radialer - tangentialer Abrichtzustellung $a_{dres}$. Die Abrichtkompensation $l_{an\,res}$ erfolgt wie die Abrichtzustellung $a_{dres}$ in der Vorzugsrichtung entsprechend dem Winkel $\alpha$ (Eingriffswinkel) mit

$$\frac{I_{ant}}{I_{anr}} = \frac{a_{dt}}{a_{dr}} = \tan\alpha$$

Der tangentiale Abrichtkompensationsbetrag $I_{ant}$ ist bei Realisierung der tangentialen Komponente der Abrichtzustellung $a_{dt}$ durch die Schleifkörper 4.1 und 4.2 bereits ausgeführt.

Hierbei wird die Zweckmäßigkeit einer Schleifkörperausbildung im Gegenflankenbereich deutlich, die an die Kontur des Bezugsprofils (der Bezugszahnstange) 5 angeglichen ist.

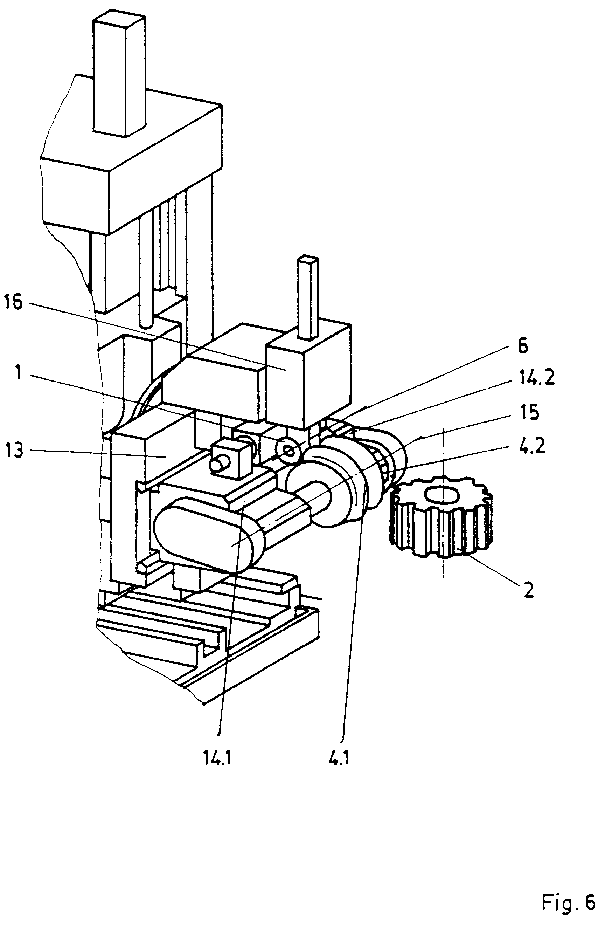

Figur 6 zeigt die Werkzeugträgerbaugruppe einer Zahnrad-Profilschleifmaschine zur Durchführung des erfindungsgemäßen Verfahrens.

Auf dem Schwenkteil 13 sind zwei Schleifsupporte 14.1 und 14.2 angeordnet, deren nicht dargestellte Schleifspindeln die beiden Schleifkörper 4.1 und 4.2 tragen. Die Schleifkörper 4.1 und 4.2 haben eine gemeinsame Drehachse 15. Die Schleifsupporte 14.1 und 14.2 sind in Richtung der Drehachse 15 gegeneinander CNC-gesteuert verstellbar.

Ebenfalls am Schwenkteil 13 ist eine Abrichteinrichtung 16 angeordnet, die mit einem rotierenden Abrichtwerkzeug 1 ausgerüstet ist, dessen Drehachse 6 parallel zur Drehachse 15 der Schleifkörper 4.1 und 4.2 liegt.

Das rotierende Abrichtwerkzeug 1 kann durch eine parallele und eine senkrecht zur Drehachse 15 wirkende CNC-Achse der Abrichteinrichtung 16 bahngesteuert an der Kontur der Schleifkörper 4.1 und 4.2 entlang geführt werden.

Die Wirkungsweise der Einrichtung ist durch die Beschreibung des Verfahrens erläutert.

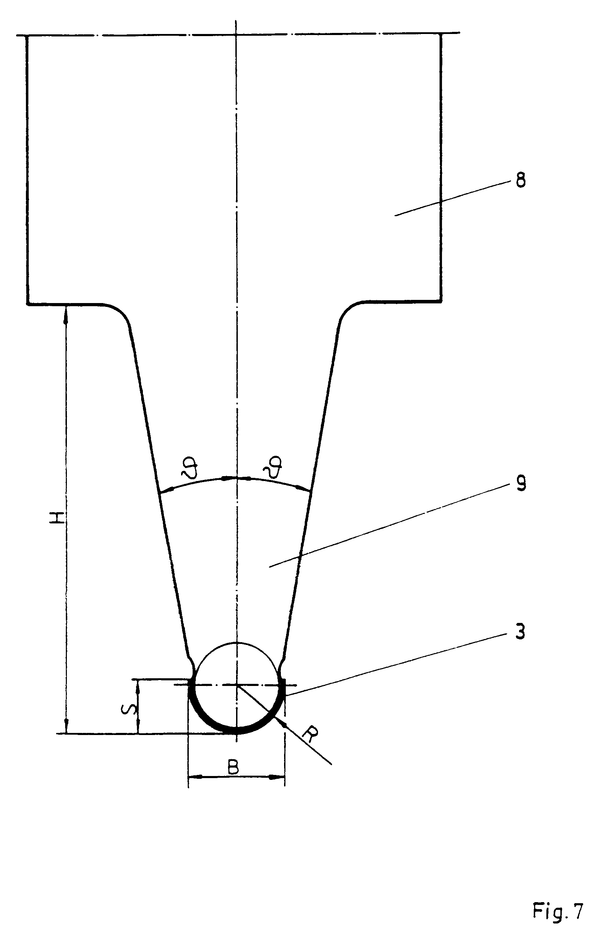

Figur 7 zeigt den Achsschnitt eines rotierenden Abrichtwerkzeuges 1 zum Profilieren eines bzw. zweier Schleifkörper 4.1; 4.2 für das Schleifen von Zahnflanken in benachbarten Zahnlücken eines Werkstückes 2, dessen Achse parallel zu der gemeinsamen Drehachse 15 der Schleifkörper 4.1 und 4.2 liegt.

Der metallische Grundkörper gliedert sich in einen zylindrischen Nabelteil 8 und einen Profilteil 9 mit den für den Achsschnitt charakteristischen Größen:

| | |
|---|---|
| Profilhöhe | $H > 2,5 \cdot m_{nl}$ |
| Profilbreite | $B \leq 0,6 \cdot m_{nl}$ |
| Profilradius | $R \leq 0,3 \cdot m_{nl}$ |
| Höhe der Schneidstoffbelegung | $S \geq 1,5 \cdot R$ |
| Profilwinkel | $\nu = (5...15)$ Grad, |
| vorzugsweise | $\nu = 10$ Grad |

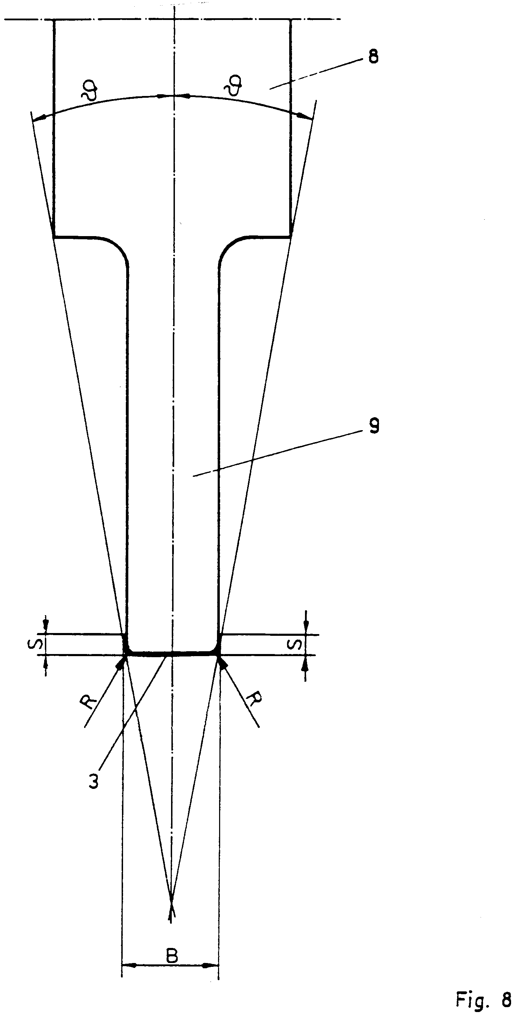

In der Figur 8 ist eine andere vorteilhafte Ausführungsform des rotierenden Abrichtwerkzeuges 1 dargestellt, das eine ähnliche Gliederung des metallischen Grundkörpers aufweist und vorzugsweise zum Schleifen kleiner Moduln bei Gewährleistung einer hohen Steife einsetzbar ist. Die charakteristischen Größen für den Achsschnitt des Profilteiles 9 sind hierbei:

| | |
|---|---|
| Profilbreite | $B \leq 0,6 \cdot m_{n1}$ |
| Profilradius | $R \leq 0,3 \cdot m_{n1}$ |
| Höhe der Schneidstoffbelegung | $S \geq 1,5 \cdot R$ |

Die Achsschnittkontur ist in einem Winkel $2\nu$ eingeschlossen, wobei gilt

| | |
|---|---|
| Profilwinkel | $\nu = (5...15)$ Grad, |
| vorzugsweise | $\nu = 10$ Grad |

Die rotierenden Abrichtwerkzeuge 1 gemäß den beiden Ausführungsformen sind mit einem Diamantschneidwerkstoff 3 belegt.

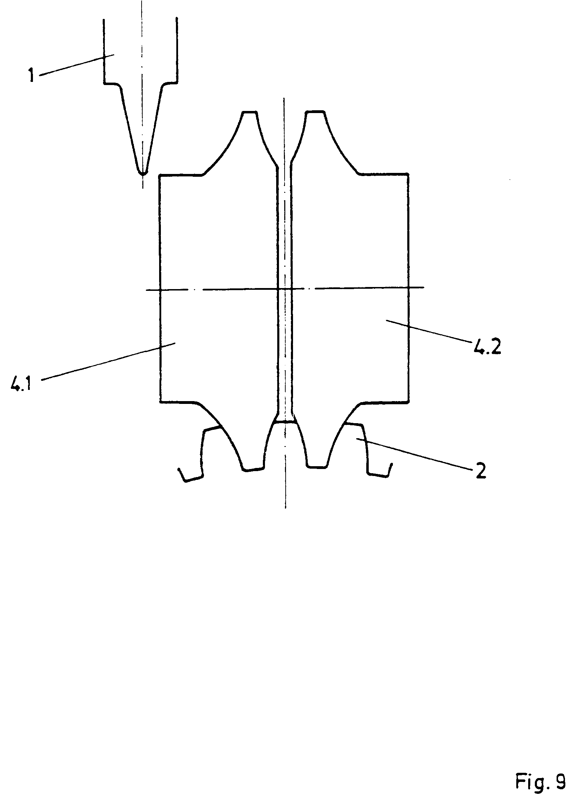

Derart gestaltete rotierende Abrichtwerkzeuge 1 sind in der Lage, alle anfallenden Profilierungsaufgaben mittels einer CNC-gesteuerten 2-Achsenbahnbewegung zu erfüllen. Figur 9 zeigt eine Anwendung der erfindungsgemäßen Lösung für das Zahnrad-Profilschleifen von beiden Zahnflanken zweier Zahnlücken eines Werkstückes (Zahnrades) 2 mittels zweier Schleifkörper 4.1 und 4.2. Dabei können sowohl Schleifkörper 4.1 und 4.2 gleicher Spezifikation bei gleichen Abrichtbedingungen als auch Schleifkörper 4.1 und 4.2 gleicher Spezifikation, aber unterschiedlich abgerichtet - z.B. für Schrupp- und Schlichtschleifbearbeitung, als auch Schleifkörper 4.1 und 4.2 unterschiedlicher Spezifikation bei gleichen oder unterschiedlichen Abrichtbedingungen eingesetzt werden.

Es ist aber auch möglich, die mit dem erfindungsgemäßen Verfahren abgerichteten Schleifkörper 4.1 und 4.2 nacheinander als Schrupp- und Schlichtschleifkörper einzusetzen, insbesondere wenn keramisch gebundene CBN-Schleifkörper unterschiedlicher Spezifikation zur Anwendung kommen.

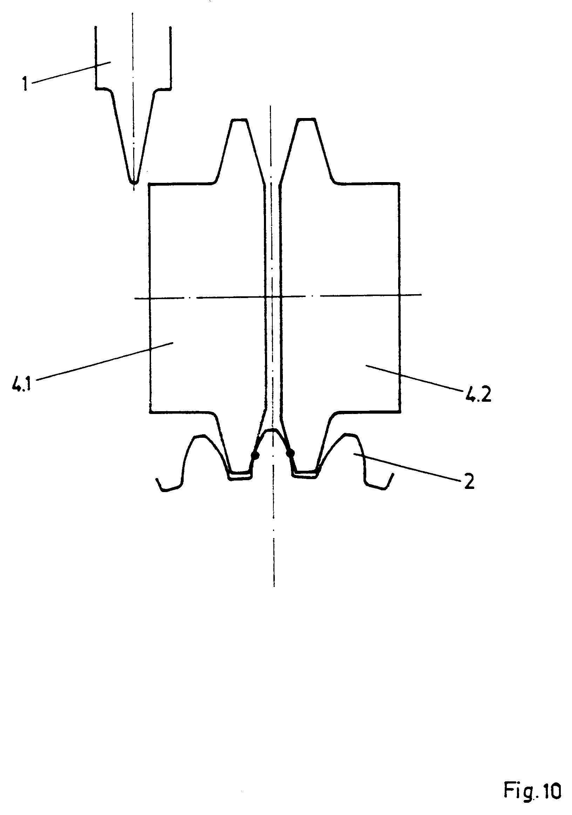

In Figur 10 ist die Anwendung der erfindungsgemäßen Lösung für das Zahnrad-Teilwälzschleifen von je einer Zahnflanke zweier Zahnlücken eines Werkstückes 2 mit zwei doppelkegelförmigen Schleifkörpern 4.1 und 4.2 dargestellt.

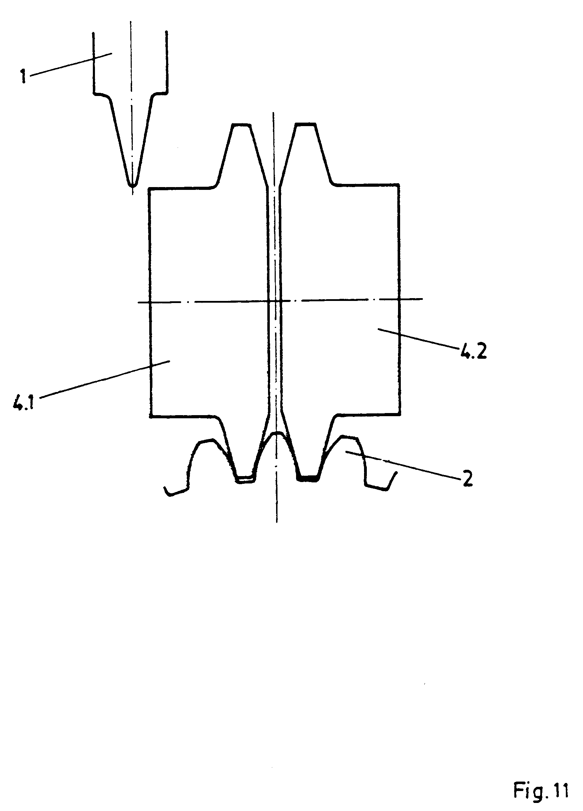

Figur 11 zeigt eine Anwendung für das Zahnrad-Teilwälzschleifen von beiden Zahnflanken zweier Zahnlücken eines Werkstückes 2 mit zwei doppelkegelförmigen Schleifkörpern 4.1 und 4.2.

Dabei können sowohl Schleifkörper 4.1 und 4.2 gleicher Spezifikation bei gleichen Abrichtbedingungen als auch Schleifkörper 4.1 und 4.2 gleicher Spezifikation, aber unterschiedlich abgerichtet - z.B. für Schrupp- und Schlichtschleifbearbeitung -, als auch Schleifkörper 4.1 und 4.2 unterschiedlicher Spezifikastion bei gleichen oder unterschiedlichen Abrichtbedingungen eingesetzt werden.

Es ist aber auch möglich, die erfindungegemäße Lösung durch Wiederholung von Elementen des Profilierungszyklus für das Schleifen mit mehr als einem Profil je Schleifkörper 4.1 und 4.2 anzuwenden. Ein solcher Anwendungsfall ist z.B. das Profilschleifen von kleinmoduligen Zahnstangen mittels mehrprofiliger Schleifkörper.

Des weiteren ist es möglich, die erfindungsgemäße Einrichtung zum Profilieren von Schleifschnecken einzusetzen

- entweder durch Bestückung der Abrichteinrichtung 16 mit einem rotierenden Profilabrichtwerkzeug (vergleichbar mit bekannten Einrichtungen an Zahnrad-Schraubwälzschleifmaschinen)
- oder mit einem rotierenden Formabrichtwerkzeug bei schrittweiser Positionsveränderung des Formabrichtwerkzeuges nach jeder Gewindeerzeugungsbewegung

Für jede der beiden Varianten ist zusätzlich ein Zwanglauf zwischen der zur Schleifkörperdrehachse 15 parallelen CNC-Achse der Abrichteinrichtung 16 und der Schleifkörperdrehung erforderlich.

Zusammenstellung der verwendeten Bezugszeichen

| | |
|---|---|
| 1 | rotierendes Abrichtwerkzeug |
| 2 | Werkstück |
| 3 | Diamantschneidwerkstoff |
| 4.1 | Schleifkörper |
| 4.2 | Schleifkörper |
| 5 | Bezugsprofil (Bezugszahnstange) |
| 6 | Drehachse des rotierenden Abrichtwerkzeuges |
| 7 | Profilmittellinie |
| 8 | Nabenteil des Abrichtwerkzeuges |
| 9 | Profilteil des Abrichtwerkzeuges |
| 10 | Schleifkörperpositionen Abrichten/Schlichtschleifen |
| 11 | Schleifkörperpositionen Schruppschleifen |
| 12 | Schleifspindel |
| 13 | Schwenkteil |
| 14.1 | Schleifsupport |
| 14.2 | Schleifsupport |
| 15 | gemeinsame Drehachse der Schleifkörper |
| 16 | Abrichteinrichtung |
| 17 | Drehachse des rotierenden Abrichtwerkzeuges |
| 18 | zylindrisches rotierendes Abrichtwerkzeug |
| 19 | Diamantschneidwerkstoff |
| P1...P19 | Elemente des Profilierungszyklus |
| W1 | Wartepositionen des Abrichtwerkzeuges |
| W2 | Wartepositionen des Abrichtwerkzeuges |
| $a_{d\,min}$ | Abrichtzustellung, erforderliches Minimum |
| $a_{dr}$ | Abrichtzustellung, radial |

| | |
|---|---|
| $a_{dres}$ | Abrichtzustellung, resultierend |
| $a_{dt}$ | Abrichtzustellung, tangential |
| $a_{ztR}$ | Zustellung, tangential, Rechtsflanke |
| $a_{ztL}$ | Zustellung, tangential, Linksflanke |
| B | Profilbreite am Abrichtwerkzeug |
| d | Teilkreisdurchmesser |
| $d_b$ | Grundkreisdurchmesser |
| $e_n$ | Zahnlückenweite im Normalschnitt |
| $e_t$ | Zahnlückenweite im Stirnschnitt |
| $\overline{e}_n$ | Sehne der Zahnlückenweite, Abstand der außenliegenden Schleifflächen der Schleifkörper bezogen auf den Teilzylinder |
| H | Profilhöhe am Abrichtwerkzeug |
| $l_{an\,r}$ | Abrichtkompensationsbetrag, radial |
| $l_{an\,res}$ | Abrichtkompensationsbetrag, resultierend |
| $l_{an\,t}$ | Abrichtkompensationsbetrag, tangential |
| $m_n$ | Normalmodul |
| R | Profilradius am Abrichtwerkzeug |
| r | Teilkreisradius |
| $r_a$ | Kopfkreisradius |
| $r_b$ | Grundkreisradius |
| $r_f$ | Fußkreisradius |
| S | Höhe der Schneidstoffbelegung |
| $s_n$ | Zahndicke im Normalschnitt |
| $s_t$ | Zahndicke im Stirnschnitt |
| z | Zähnezahl |
| x | Profilverschiebungsfaktor |
| $\alpha$ | Eingriffswinkel (Profilwinkel am Teilkreis) |
| $\beta$ | Schrägungswinkel (am Teilkreis) |
| $\eta$ | Zahnlückenhalbwinkel |
| $\psi$ | Zahndickenhalbwinkel |
| $\nu$ | Profilwinkel am Abrichtwerkzeug |
| Index 1 | Verzahnung des Werkstückes |
| Index 2 | Ersatzverzahnung |

**Patentansprüche**

**1.** Verfahren zum Schleifen rillenförmiger Außenprofile eines Werkstückes, insbesondere zum Schleifen von Verzahnungen an Gerad- und Schrägstirnrädern, bei dem mittels zweier Schleifkörper, die entsprechend den Außenprofilkonturen des Werkstückes profiliert werden, Teilprofile ein und desselben Werkstückes gleichzeitig bearbeitet werden, indem durch Verschiebung der Schleifkörper gegeneinander Zustellungen bewirkt werden und durch ihre gemeinsame Hubbewegung die Spanabnahme am Werkstück erfolgt, dadurch gekennzeichnet, daß

a) von einer Steuereinrichtung, entsprechend dem Abstand der rillenförmigen Außenprofile des Werkstückes (2), der axiale Abstand beider Schleifkörper (4.1 und 4.2) voneinander berechnet und damit die Schlichtschleifpositionen (10) beider Schleifkörper (4.1 und 4.2) bestimmt werden,

b) danach die Schleifkörper (4.1 und 4.2) in diese Positionen verfahren und dort positioniert werden,

c) dann mit einem Abrichtwerkzeug (1), das nach einem vorgegebenen Rechnerprogramm entsprechend dem Werkstückprofil bahngesteuert entlang der beiden Schleifkörper (4.1 und 4.2) bewegt wird, die Schleifkörper (4.1 und 4.2) nacheinander profiliert werden, wobei eine Wirkrauhtiefe der Schleifkörper (4.1 und 4.2) für das Schruppschleifen erzeugt wird,

d) nach diesem Abrichtvorgang für das Schruppschleifen beide Schleifkörper (4.1 und 4.2) in die von der Steuereinrichtung unter Berücksichtigung des Schleifaufmaßes errechneten Schruppschleifpositionen (11) verfahren und dort positioniert werden,

e) sodann die Schruppschleifbearbeitung des Werkstückes (2) erfolgt,

f) nach Beendigung der Schruppschleifbearbeitung die Schleifkörper (4.1 und 4.2) erneut in die auch für das Abrichten genutzten Schlichtschleifpositionen (10) verfahren und dort positioniert werden,

g) dann mit dem Abrichtwerkzeug (1) analog dem Abrichtvorgang für das Schruppschleifen erneut die Schleifkörper (4.1 und 4.2) nacheinander profiliert werden, wobei eine Wirkrauhtiefe der Schleifkörper (4.1 und 4.2) für das Schlichtschleifen erzeugt wird,

h) nach diesem Abrichtvorgang für das Schlichtschleifen beide Schleifkörper (4.1 und 4.2) in ihren Positionen (10) verbleiben und in diesen Positionen (10) die Schlichtschleifbearbeitung des Werkstückes (2) erfolgt.

2. Verfahren nach Anspruch 1,
dadurch gekennzeichnet,
daß der Ablauf beim Abrichten der Schleifkörper für das Profilschleifen von Zahnrädern vorzugsweise in folgenden Verfahrensschritten erfolgt:

i) Positionierung der in der Normalschnittebene tangential zum Werkstück (2) verstellbaren Schleifkörper (4.1 und 4.2) symmetrisch zur Profilmittellinie (7), daß der Abstand bezogen auf den Teilzylinder zwischen den außenliegenden Schleifflächen der Schleifkörper (4.1 und 4.2)

$$\bar{e}_{n2} = \frac{d \cdot \sin [(\psi_1 + 2\eta_1) \cos^3 \beta]}{\cos^2 \beta}$$

beträgt, wobei in der Gleichung bedeuten:

$\bar{e}_{n2}$ = Sehne der Zahnlückenweite der "Ersatzverzahnung" (Index 2), wobei gilt $m_{n2} = 3\, m_{n1}$
$m_{n1}$ = Normalmodul der Verzahnung
$m_{n2}$ = Normalmodul der "Ersatzverzahnung"
d = Teilkreisdurchmesser

$\psi_1$ = Zahndickenhalbwinkel ⎫
$\eta_1$ = Zahnlückenhalbwinkel ⎬ bezogen auf
ß = Schrägungswinkel ⎭ den Teilkreis

j) Realisierung der Abrichtzustellung

- für keramisch gebundene Korundschleifkörper radial zu den Schleifkörpern (4.1 und 4.2) um einen Betrag $a_{dr}$ oder
- für keramisch gebundene CBN-Schleifkörper zur Verminderung des Schleifkörperverbrauches kombiniert radial ($a_{dr}$) und tangential ($a_{dt}$) zu den Schleifkörpern (4.1 und 4.2) im Verhältnis

$$\frac{a_{dt}}{a_{dr}} = \tan\alpha$$

wobei $\alpha$ der Profilwinkel am Teilkreis ist und die tangentiale Komponente der Abrichtzustellung ($a_{dt}$) jeweils von den Schleifkörpern (4.1 und 4.2) ausgeführt wird.

k) Bewegen des Abrichtwerkzeuges (1) von einer festgelegten Warteposition W1 (W2) zu einer anderen Warteposition W2 (W1), wobei nacheinander das berechnete Profil an beiden Schleifkörpern (4.1 und 4.2) durch einen geschlossenen Abrichtzyklus erzeugt wird.

l) Realisierung der Abrichtkompensation,

- indem die Schleifkörper (4.1 und 4.2) bezogen auf das Werkstück (2) radial um den Betrag $l_{anr}$ bei radialer Abrichtzustellung $l_{anr} = a_{dr}$ nachgestellt werden oder
- indem die Schleifkörper (4.1 und 4.2) bezogen auf das Werkstück (2) kombiniert radial um den Betrag $l_{anr}$ und tangential um den Betrag $l_{ant}$ im Verhältnis

$$\frac{l_{ant}}{l_{anr}} = \tan\alpha$$

bei kombinierter radialer und tangentialer Abrichtzustellung mit

$$\tan\alpha = \frac{a_{dt}}{a_{dr}}$$

nachgestellt werden wobei der tangentiale Abrichtkompensationsbetrag ($l_{ant}$) bereits mit der tangentangentialen Abrichtzustellkomponente erledigt wurde.

---

**3.** Einrichtung zur Durchführung des Verfahrens nach Anspruch 1, enthaltend zwei Schleifsupporte, die je eine Antriebseinheit und einen Schleifkörper tragen, und eine Abrichteinrichtung, wobei die Schleifsupporte (14.1 und 14.2) so angeordnet sind, daß beide Schleifkörper (4.1 und 4.2) eine gemeinsame Drehachse (15) aufweisen, dadurch gekennzeichnet,

daß jeder Schleifsupport (14.1 und 14.2) in der gemeinsamen Drehachse CNC-gesteuert axial verschiebbar ist, und ein einziges rotierendes Abrichtwerkzeug (1), dessen Rotationsachse (6) parallel zur Drehachse der Schleifköper (15) angeordnet ist, einer in zwei Koordinaten bewegbaren Abrichteinrichtung (16), die mit einer CNC-Steuereinrichtung verbunden ist, vorgesehen ist.

**4.** Einrichtung nach Anspruch 3,
dadurch gekennzeichnet,
daß das rotierende Abrichtwerkzeug (1) aus einem metallischen Grundkörper besteht, der mit einem Diamantschneidwerkstoff (3) belegt ist, wobei der Grundkörper sich in einen Nabenteil (8) und einen Profilteil (9) gliedert und der Profilteil (9) folgende charakteristische Größen besitzt

| | |
|---|---|
| - Profilhöhe | $H > 2{,}5 \cdot m_{n1}$ |
| - Profilbreite | $B \leq 0{,}6 \cdot m_{n1}$ |
| - Profilradius | $R \leq 0{,}3 \cdot m_{n1}$ |
| - Höhe der Schneidstoffbelegung | $S \geq 1{,}5 \cdot R$ |
| - Profilwinkel | $\nu = (5...15)$ Grad, |
| vorzugsweise | $\nu = 10$ Grad, |

wobei $m_{n1}$ den Normalmodul des zu bearbeitenden Werkstückes darstellt.

**5.** Einrichtung nach Anspruch 3,
dadurch gekennzeichnet,
daß das rotierende Abrichtwerkzeug (1) aus einem metallischen Grundkörper besteht, der mit einem Diamantschneidwerkstoff (3) belegt ist, wobei der Grundkörper sich in einen Nabenteil (8) und einen Profilteil (9) gliedert und der Profilteil (9) folgende charakteristische Größen besitzt

| | |
|---|---|
| - Profilbreite | $B \leq 0{,}6 \cdot m_{n1}$ |
| - Profilradius | $R \leq 0{,}3 \cdot m_{n1}$ |
| - Höhe der Schneidstoffbelegung | $S \geq 1{,}5 \cdot R$ |

und dessen Achsschnittkontur in einem Winkel $2\nu$ eingeschlossen ist, wobei gilt

| | |
|---|---|
| - Profilwinkel | $\nu = (5...15)$ Grad, |
| vorzugsweise | $\nu = 10$ Grad, |

wobei $m_{n1}$ den Normalmodul des zu bearbeitenden Werkstückes darstellt.

## Claims

**1.** Method for the grinding of groove-shaped external profiles of work pieces, particularly for the grinding of the teeth of straight and helical spur gears, i.e., profile sections of one and the same work piece arc simultaneously machined by two grinding wheels which arc profiled acc. to the external profile contours of the work pieces. The metal is removed by opposite feed movement and joint stroking travel of the two grinding wheels.
The method is characterised by:

a) that a control unit calculates the axial distance between the two grinding wheels (4.1 and 4.2) acc. to the distance of the groove-shaped external profiles of the work piece (2) and consequently, determines the finish-grinding positions (10) of the two grinding wheels (4.1 and 4.2),

b) then the two grinding wheels (4.1 and 4.2) are moved into these positions and remain positioned there,

c) then a dressing tool (1), which is moved along the two grinding wheels (4.1 and 4.2) by continuous path control acc. to an existing computer program and work profile, profiles the two grinding wheels (4.1 and 4.2) one after the other, and generates a surface roughness suitable for roughing on the two grinding wheels (4.1 and 4.2),

d) after this dressing procedure for roughing the two grinding wheels (4.1 and 4.2) are moved into the rough-grinding positions (11) which have been calculated by the control unit under consideration of the grinding stock, and they remain positioned there,

e) then the work piece (2) is rough-ground,

f) after termination of the rough-grinding the two grinding wheels (4.1 and 4.2) are moved into the finish-grinding positions (10), which also are used as dressing positions, and remain positioned there,

g) then the two grinding wheels (4.1 and 4.2) are re-profiled one after the other by the dressing tool (1) analogous to the dressing procedure for the rough-grinding to generate a surface suitable for finish-grinding on the two grinding wheels (4.1 and 4.2),

h) after this dressing for finish-grinding the two grinding wheels (4.1 and 4.2) remain in their positions (10) and finish-grinding of the work piece (2) takes place in those positions (10).

2. Method acc. to claim 1, characterised by:
that the dressing procedure for the grinding wheels for the grinding of gear wheels runs preferably acc. to the following steps of the method:

i) The position of the two grinding wheels (4.1 and 4.2) being adjustable tangentially in the plane normal to the work piece (2) and symmetrical to the profile centre line (7) such that the distance related to the pitch cylinder between the outer grinding surfaces of the two grinding wheels (4.1 and 4.2) amounts to

$$\bar{e}_{n2} = \frac{d \times \sin[(\psi_1 + 2\eta_1)\cos^3\beta]}{\cos^2\beta}$$

In the equation the symbols are:

$\bar{e}_{n2}$ = Chordal of space width of the virtual teeth (index 2) where $m_{n2} = 3\,m_{n1}$
$m_{n1}$ = Normal module of the teeth
$m_{n2}$ = Normal module of the "virtual teeth"
d = Pitch circle diameter

$\psi_1$ = Tooth thickness half-angle )
$\eta_1$ = Tooth space half-angle ) related to the pitch circle
$\beta$ = Helix angle )

j) Dressing infeed movement

- radially to the two grinding wheels (4.1 and 4.2) by the amount $a_{dr}$ for vitrified - bond corundum grinding wheels, or
- combined radially ($a_{dr}$) and tangentially ($a_{dt}$) with the ratio

$$\frac{a_{dt}}{a_{dr}} = \tan\alpha$$

for vitrified-bond CBN-grinding wheels to reduce grinding wheel wear. Where "$\alpha$" is the profile angle at the pitch circle, and the tangential component of the dressing feed ($a_{dt}$) is passed by the grinding wheels (4.1 and 4.2) each.

k) Moving the dressing tool (1) from a defined stand-by position W1 (W2) to the other stand-by position W2 (W1) and the calculated profile is sequentially generated on the two grinding wheels (4.1 and 4.2) in a closed dressing cycle.

l) Dressing compensation performed by

- re-adjusting the two grinding wheels (4.1 and 4.2) radially by the amount $l_{anr}$ with radial dressing feed $l_{anr} = a_{dr}$ relative to the work piece (2), or
- re-adjusting radially by the amount $l_{anr}$ and tangentially by the amount $l_{ant}$ combined such that:

$$\text{ratio } \frac{l_{ant}}{l_{anr}} = \tan\alpha$$

with combined radial and tangential dressing where

$$\tan\alpha = \frac{a_{dt}}{a_{dr}},$$

whereby the tangential dressing compensation amount ($l_{ant}$) was already allowed for with the tangential dressing infeed component.

3. Mechanism for the realisation acc. to claim 1, i.e., basically consisting of two grinding slides carrying one driving unit and grinding spindle each as well as a dresser, characterised by:
that the grinding slides (14.1 and 14.2) are arranged in such a way that the two grinding wheels (4.1 and 4.2) have a common axis of rotation (15) along which each grinding slide (14.1 and 14.2) is adjustable axially by CNC-control and a single rotating dressing tool (1) whose axis of rotation (6) is located parallel to the axis of the grinding wheels (15), and a dresser (16) to be traversed in two co-ordinates controlled by the CNC-unit.

4. Mechanism acc. to claim 3
characterised by:
that the rotating dressing tool (1) consists of a metal body coated with diamond abrasive (3). The body has the following characteristics:

| | |
|---|---|
| - Profile height | $H > 2.5 \times m_{n1}$ |
| - Profile width | $B \leq 0.6 \times m_{n1}$ |
| - Profile radius | $R \leq 0.3 \times m_{n1}$ |
| - Thickness of abrasive lining | $S \geq 1.5 \times R$ |
| - Profile angle | $v = (5...15)°$ |
| preferred | $v = 10°$ |

5. Mechanism acc. to claim 3,
characterised by:
that the rotating dressing tool (1) consists of a metal body coated with diamond abrasive(3). The body is divided into a hub part (8) and profile part (9). The profile part (9) features the following characteristics:

| | |
|---|---|
| - Profile width | $B \leq 0.6 \times m_{n1}$ |
| - Profile radius | $R \leq 0.3 \times m_{n1}$ |
| - Thickness of abrasive coating | $S \geq 1.5 \times R$ |

and the cone about its axis is confined by an angle $2 \times v$ where:

| | |
|---|---|
| - Profile angle | $v = (5...15)°$ |
| preferred | $v = 10°$ |

**Revendications**

1.  Procédé pour la rectification du profil extérieur rainuré d'une pièce, en particulier pour la rectification de la denture des roues dentées cylindriques à denture droite et des routes dentées cylindriques à denture hélicoïdale par lequel deux meules de travail profilés selon le profil extérieur de la pièce, usinent simultanément les profils partiels de la même pièce par déplacement des meules de travail réalisant une avance l'une en direction de l'autre et, par leur course commune, exécutent l'abrasion de la surépaisseur sur la pièce,
caractérisé en ce que

    a) une installation de commande calcule l'écart axial des deux meules de travail (4.1 et 4.2) l'une par rapport à l'autre sur la base de l'écart des profils extérieurs rainurés de la pièce (2), de manière à déterminer les positions de rectification d'ébauche (10) des deux meules de travail (4.1 et 4.2),
    b) les meules de travail (4.1 et 4.2) accostent ensuite cette position pour être positionnées,
    c) un outil de dressage (1) déplacé par contournage le long des deux meules de travail (4.1 et 4.2) d'après un programme informatisé préétabli est déplacé suivant le profil de la pièce, profile les meules de travail (4.1 et 4.2) l'une après l'autre, donnant la profondeur de rayure des meules de travail (4.1 et 4.2) pour la rectification d'ébauche,
    d) les deux meules de travail (4.1 et 4.2) sont déplacées après le dressage pour la rectification d'ébauche et amenées à la position de rectification d'ébauche (11) calculée par l'installation de commande compte tenu de la surépaisseur d'abrasion pour y être positionnées,
    e) la rectification d'ébauche de la pièce (2) est alors exécutée,
    f) après exécution de la rectification d'ébauche, les meules de travail (4.1 et 4.2) sont ramenées aux positions de rectification d'ébauche utilisée pour le dressage (10) pour y être positionnées
    g) l'outil de dressage (1) profile alors une nouvelle fois les meules de travail (4.1 et 4.2) l'une après l'autre comme pour le dressage de rectification d'ébauche et donne la profondeur de rayure des meules de travail (4.1 et 4.2) pour la rectification de finition,
    h) après le dressage pour la rectification de finition, les deux meutes de travail (4.1 et 4.2) gardent leur position (10), après quoi la rectification de finition de la pièce (2) est exécutée dans cette position (10).

2.  Procédé selon la revendication 1,
caractérisé en ce
que la séquence de dressage des meules de travail pour la rectification de profil des roues dentées est réalisée préférentiellement selon la suite d'opérations suivantes:

    i) Positionnement des meules de travail (4.1 et 4.2) pivotantes tangentiellement par rapport à la pièce (2) dans le plan de section normale et symétriquement par rapport à la ligne de base (7) de manière que l'écart entre les surfaces d'abrasion extérieures des meules de travail (4.1 et 4.2) rapporté au cylindre primitif soit

$$\bar{e}_{n2} = \frac{d \cdot \sin \left[\psi_1 + 2\eta_1\right) \cos^3 \beta}{\cos^2 \beta}$$

    les symboles de l'équation ci-dessus signifiant :

    $\bar{e}_{n2}$  = corde de l'entredent de la «denture équivalente» (indice 2) pour laquelle $m_{n2} = 3\ m_{n1}$
    $m_{n1}$  = module normal de la denture
    $m_{n2}$  = module normal de la «denture équivalente»
    d  = diamètre du cercle primitif

    $\psi_1$  = demi-angle de dent à corde   ) rapporté
    $\eta_1$  = demi-angle d'intervalle   ) au cercle
    $\beta$  = angle d'hélice   ) primitif

    j) Réalisation de l'avance de dressage

    -   pour les meutes de travail au corindon à agglomérant céramique radialement par rapport aux meutes de travail (4.1 et 4.2) de la cote $a_{dr}$ ou

- pour les meules au nitrite de bore cristallin à agglomérant céramique par approche combinée radiale ($a_{dr}$) et tangentielle ($a_{dt}$) par rapport aux meules de travail (4.1 et 4.2) selon l'équation

$$\frac{a_{dt}}{a_{dr}} = \tan \alpha$$

dans le but de prévenir l'usure de meule de travail, $\alpha$ étant l'angle de profil du cercle primitif, la partie de l'avance tangentielle de dressage ($a_{dt}$) étant exécutée par tes meules de travail (4.1 et 4.2).

k) Déplacement de l'outil de dressage (1) d'une position d'attente fixe W1 (W2) vers une autre position d'attente W2 (W1), les profils calculés pour les deux meules de travail (4.1 et 4.2) étant réalisés l'un après l'autre par cycle de dressage complet.
l) Réalisation de la compensation de dressage,

- par poursuite des meules de travail (4.1 et 4.2) de la cote $l_{anr}$ mesurée radialement par rapport à la pièce (2) pour l'avance de dressage radiale $l_{anr} = a_{dr}$ ou
- par poursuite des meules de travail (4.1 et 4.2) de la cote radiale $l_{anr}$ et de la cote tangentielle $l_{ant}$ combinées selon l'équation

$$\frac{l_{ant}}{l_{anr}} = \tan \alpha$$

pour l'avance de dressage combinée radiale et tangentielle avec

$$\tan g\ \alpha = \frac{a_{dt}}{a_{dr}}$$

pour laquelle la compensation de dressage tangentielle ($l_{ant}$) est déjà intégrée dans la composante de l'avance de dressage tangentielle.

**3.** Installation pour l'exécution du procédé selon la revendication 1 comportant deux chariots porte-meules portant chacune une unité de transmission et une meule de travail et une installation de dressage pour laquelle les chariots porte-meules (14.1 et 14.2) sont disposés de telle manière que les deux meules de travail (4.1 et 4.2) ont un axe de rotation commun (15)
caractérisée en ce
que chacun des chariots porte-meules de travail peut être déplacé axialement dans l'axe de rotation commun par transmission CNC et qu'elle est dotée d'un seul outil de dressage (1) dont l'axe de rotation (6) est parallèle à l'axe de rotation des meules de travail (15) et solidaire d'une installation de dressage (16) déplacée selon deux coordonnées (16) et reliée à une installation de transmission CNC.

**4.** Installation selon la revendication 3
caractérisée en ce
que l'outil de dressage rotatif (1) est constitué par un corps de base métallique recouvert d'un matériau de coupe diamanté (3), le corps de base étant réparti entre une partie moyeu (8) et une partie profilée (9), la partie profilée ayant les dimensions caractéristiques suivantes:

| - hauteur de profil | $H < 2,5 \cdot m_{n1}$ |
|---|---|
| - largeur de profil | $B \leq 0,6 \cdot m_{n1}$ |
| - rayon de profil | $R \leq 0,3 \cdot m_{n1}$ |
| - hauteur de revêtement de coupe | $s \geq 1,5 \cdot R$ |
| - angle de profil | $v = (5 \text{ à } 15)°$ |
| avec préférentiellement | $v = 10°$ |

où $m_{n1}$ est le module normal de la pièce à rectifier.

**5.** Installation selon la revendication 3,
caractérisée en ce
que l'outil de dressage rotatif (1) est constitué par un corps de base métallique recouvert d'un matériau de coupe diamanté (3), le corps de base étant réparti entre une partie moyeu (8) et une partie profilée (9), la partie profilée (9) ayant les dimensions caractéristiques suivantes :

| - largeur de profil | $B \leq 0,6 \cdot m_{n1}$ |
|---|---|
| - rayon de profil | $R \leq 0,3 \cdot m_{n1}$ |
| - hauteur de revêtement de coupe | $s \geq 1,5 \cdot R$ |
| - angle de profil | $v = (5 \ \text{à} \ 15)°$ |
| avec préférentiellement | $v = 10°$ |

où $m_{n1}$ est le module normal de la pièce à rectifier.

Fig. 1

$a_{zt}R$  $\bar{e}_{n2}$  $a_{zt}L$

$(\bar{e}_{n2} - a_{zt}R - a_{zt}L)$

Fig. 2

Fig. 3.1

Fig. 3.2

Fig.4

Fig. 5.1

Fig. 5.2

Fig. 6

Fig. 7

Fig. 8

Fig. 9

Fig. 10

Fig. 11